# FASCICULE DE BREVET EUROPEEN

(11) **EP 0 730 212 B1**
(45) Date de publication et mention de la délivrance du brevet: **22.01.2003**
(21) Numéro de dépôt: 96400346.1
(22) Date de dépôt: 20.02.1996
(51) Int. Cl.: G05D 1/06

(54) **Dispositif de contrôle d'un système d'aéronef en pilotage manuel utilisant notamment un collimateur tête haute**
Steueranordnung eines handgesteuerten Flugzeugsystemes mit insbesondere einem Head-Up-Display
Control arrangement for a manually controlled aircraft system using especially a head-up display

(30) Priorité: 02.03.1995 US 397351
(43) Date de publication de la demande: 04.09.1996
(73) Titulaire: THALES AVIONICS S.A., 78141 Vélizy Villacoublay Cédex (FR)
(72) Inventeur: Ching, Ron, 92402 Courbevoie Cedex (FR); Webster, J.R. Lawren B., 92402 Courbevoie Cedex (FR); Faivre, François, 92402 Courbevoie Cedex (FR)
(74) Mandataire: Benoit, Monique

(56) Documents cités:
- EP-A- 0 324 195
- EP-A- 0 396 071
- EP-A- 0 489 521
- EP-A- 0 545 473
- DE-A- 3 546 116
- US-A- 4 057 782
- US-A- 5 359 890
- US-A- 5 382 954

## Description

La présente invention concerne un dispositif de contrôle d'un système d'aéronef en pilotage manuel utilisant notamment un collimateur tête haute. Elle s'applique en particulier pour permettre un contrôle d'un atterrissage ou d'un décollage manuel depuis la place de droite, celle d'un co-pilote par exemple, dans la cabine de pilotage d'un avion.

L'utilisation de collimateurs d'atterrissage pour des approches en pilotage manuel se fait de plus en plus fréquemment, y compris par mauvaise visibilité, ainsi par exemple par mauvais temps correspondant à un niveau de catégorie 3A telle que le définit la réglementation aéronautique.

L'utilisation de ces collimateurs et de leurs systèmes associés à bord d'avions nécessite qu'un certain nombre de paramètres de contrôle soient présentés en place droite pour surveiller ou contrôler le travail de pilotage effectué en place gauche sur des informations présentées sur le collimateur, donc visibles uniquement par le pilote.

Ces informations sont notamment des ordres de guidage de trajectoires élaborées à partie de signaux ILS ou équivalents.

Les paramètres de contrôle à présenter au co-pilote sont définis dans diverses réglementations, en particulier les réglementations connues AC 120-28C. Ces réglementations imposent essentiellement de présenter au co-pilote la vitesse verticale de l'avion et les écarts successifs par rapport au faisceau ILS.

Dans le cas de remplacement ou d'adjonction du système à un avion déjà existant et dont la planche de bord est donc déjà définie, la présentation de ces paramètres de contrôle introduit souvent des modifications complexes et coûteuses de cette planche de bord, en particulier de l'indicateur d'attitude connu sous le terme ADI selon les initiales de l'expression anglo-saxonne "Attitude Display Indicator", de l'indicateur de vitesse et de la zone d'informations fournies par le radio-altimètre.

Une demande de brevet européen EP-A-0 396 071 divulgue un écran situé sur le tableau de bord d'un aéronef affichant à la fois des informations de vitesse verticale et des informations de trafic aérien.

Le but de l'invention est de supprimer ces inconvénients par une présentation particulière des symboles au niveau de la place droite.

A cet effet, l'invention a pour objet un dispositif de contrôle d'un système d'aéronef en pilotage manuel tel que défini par la revendication 1.

L'invention a pour principaux avantages qu'elle améliore la sécurité, qu'elle simplifie le remplacement ou l'adjonction des systèmes sur des planches de bord déjà existantes, qu'elle simplifie l'entraînement des pilotes et qu'elle est simple à mettre en oeuvre.

D'autres caractéristiques et avantages de l'invention apparaîtront à l'aide de la description qui suit fait en regard des dessins annexés qui représentent :
- la figure 1, à titre d'exemple, un système certifié catégorie 3A pour atterrissage manuel ;
- la figure 2, une partie de planche de bord située du côté droit de la cabine de pilotage et munie d'équipements conventionnels ;
- la figure 3, une situation possible sur la planche de bord d'un dispositif selon l'invention ;
- la figure 4, un mode de réalisation possible d'un dispositif selon l'invention.

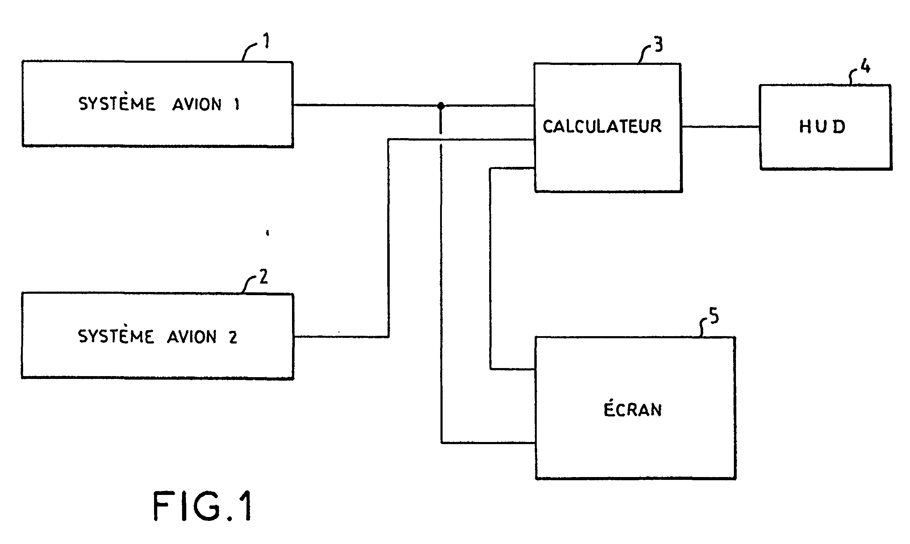

La figure 1 présente, à titre d'exemple un système certifié catégorie 3A pour l'atterrissage manuel. Il est constitué au moins d'un premier système avion 1 et d'un deuxième système avion 2 reliés à un calculateur 3 fournissant des signaux à un collimateur tête haute 4. Le système comprend par ailleurs un écran 5 relié au premier système avion 1 et au calculateur 3. Cet écran 5 fait office d'instrument de contrôle pour le co-pilote.

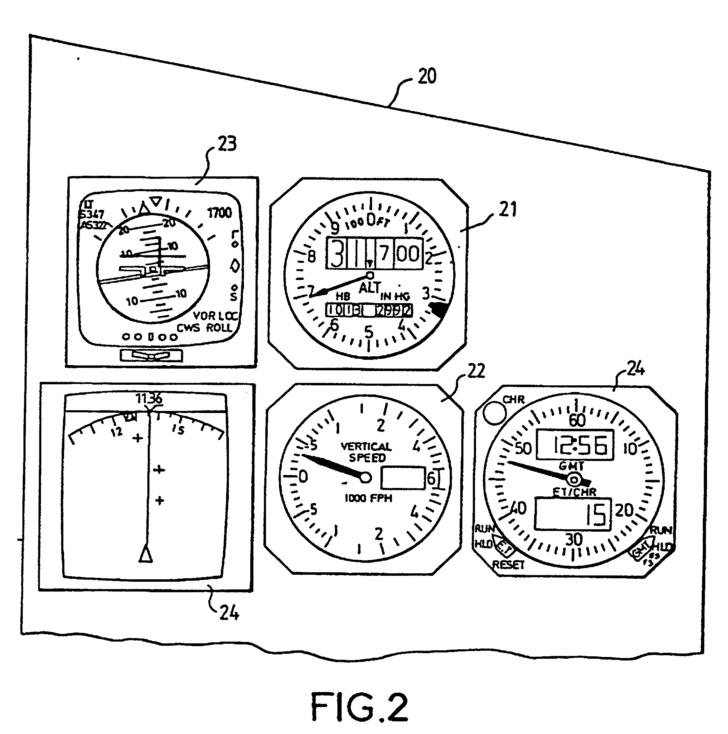

La figure 2 présente une partie de planche de bord 20 située du côté droit de la cabine de pilotage et munie d'équipements conventionnels. Cette partie comporte notamment un radio-altimètre 21, un indicateur de vitesse 22 et un ADI 23. Ajouter un instrument de contrôle atterrissage sur cette planche de bord 20 est une opération complexe et coûteuse. Il faut notamment pour cela modifier l'ADI, remplacer un des équipements 21, 22, précités et d'autres équipements 24 par un système de défilement, rajouter un bouton d'alarme et de mode. Par ailleurs, toutes les informations rajoutées, nécessaires au contrôle atterrissage, sont éparpillées, ce qui ne favorise pas la sécurité.

Le principe de l'invention consiste à remplacer un des équipements précités 21, 22, de la planche de bord par un écran ayant la fonction de l'équipement remplacé et des informations d'indication de contrôle atterrissage telles que par exemple celles définie dans la réglementation AC 120-28C.

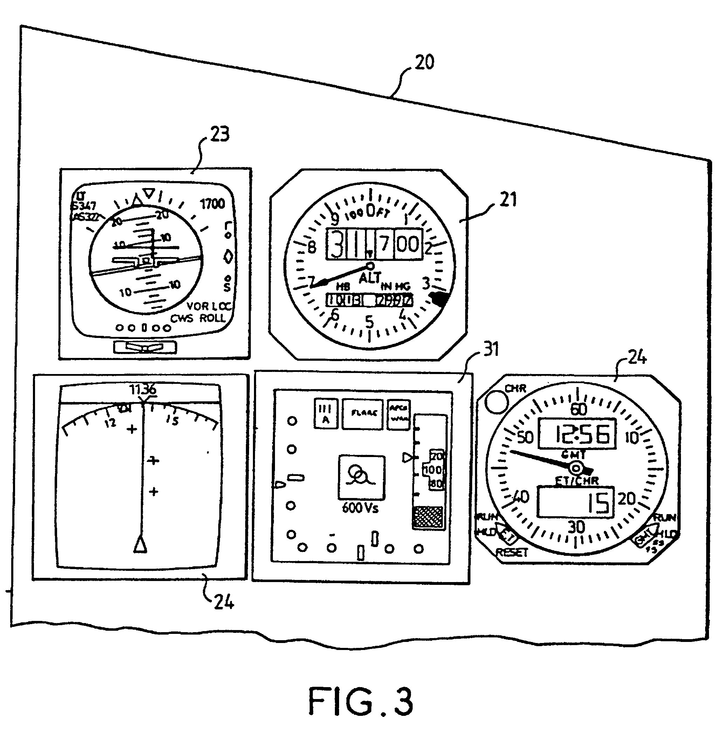

Dans l'exemple de réalisation illustré par la figure 3, le dispositif selon l'invention est un écran de visualisation 31 situé à la place de l'indicateur de vitesse verticale 22. Cet écran est par exemple relié au premier système avion 1 et au calculateur 3 tels que définis en regard de la figure 3. En fonction primaire l'instrument électronique reproduit l'instrument remplacé. En l'occurrence il présente une image d'indicateur type 22.

L'autre fonction assurée par le dispositif de contrôle est destinée au contrôle de l'atterrissage. Pour cela, l'écran 31 affiche par exemple une indication de contrôle d'approche d'atterrissage. Il peut par ailleurs afficher des informations de décollage et de roulage. Toutes ces indications sont notamment spécifiées dans la réglementation AC 120-28C.

Le dispositif peut fonctionner par exemple comme un indicateur de vitesse verticale répondant à la norme FAR 135, c'est à dire qu'il présente sous forme conventionnelle, avec des aiguilles, la mesure de la vitesse verticale élaborée à partie des variations de pression suivant que l'avion monte ou descend. L'écran 31 affiche cette configuration conventionnelle par exemple durant les opérations en bonne visibilité dites VMC selon l'expression anglo-saxonne "Visual Meteorological Condition". Cette configuration symbolise par exemple la forme de l'indicateur de vitesse verticale illustré par la figure 2.

Pendant les opérations dites IMC selon l'expression anglo-saxonne "Instrument Meteorological condition", lorsque le mode correspondant à la catégorie 3A précitée ou au décollage est sélectionné, l'écran 31 affiche toujours l'indication de vitesse verticale de façon notamment à ce que le dispositif conserve sa fonction d'indicateur de vitesse verticale. Cependant, cette information est présentée sous forme digitale, comme l'illustre par exemple la valeur 600 affichée dans le mode de réalisation présenté par la figure 3. La mesure de cette vitesse verticale est par exemple élaborée à partir d'une boucle de mesure baro-inertielle couplant une mesure d'accélération verticale et de pression atmosphérique. La mesure de l'accélération est par exemple acquise en sortie de la centrale à inertie de l'avion.

De plus, pendant ces opérations IMC, le dispositif selon l'invention peut par exemple satisfaire les exigences de certification d'approche de la catégorie 3A. Ces exigences sont notamment une présentation d'information et d'alarmes au co-pilote dit aussi PNF selon l'expression anglo-saxonne "Pilot Non Flying". Ces informations et alarmes permettent notamment de garantir le bon déroulement de l'approche et de l'arrondi. En particulier, le co-pilote doit être capable de détecter et de prévenir un arrondi trop long ou trop court

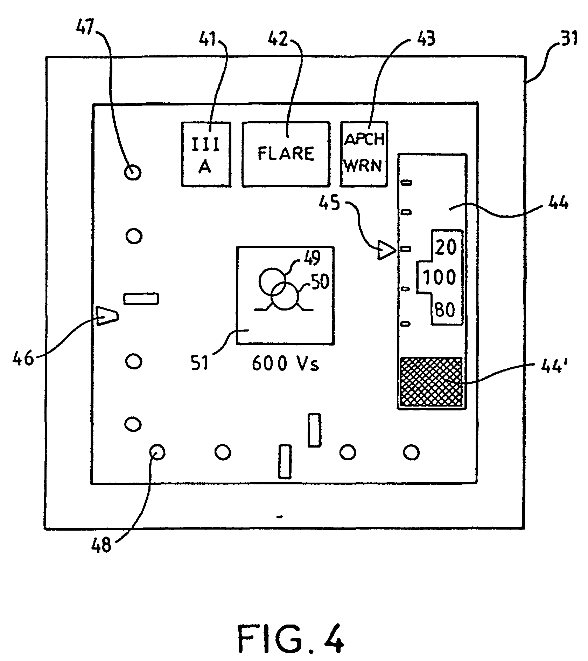

La figure 4 présente un exemple d'affichage de l'écran 31. Cet affichage est par exemple déclenché par une approche en mode IMC.

En haut de l'écran apparaissent trois indicateurs 41, 42, 43 de mode et d'alarmes :
- un indicateur de mode 41, ici IIIA ou 3A;
- un indicateur FLARE, indicateur d'arrondi 42, cette indication peut par exemple clignoter pour indiquer le début de la manoeuvre d'arrondi ;
- un indicateur 43 APCH WRN selon l'expression anglo-saxonne "Approach Warning Alarm", indique, en virant par exemple au rouge, la détection d'un écart trop grand dans la phase d'approche, hors tolérance.

Du coté droit de l'écran 31, figure un indicateur 44 de hauteur radio-altimètre qui représente par exemple sous forme de ruban, l'altitude. La surface plus foncée du bas 44' remonte par exemple jusqu'au centre du ruban 44 donnant ainsi une excellente information de vitesse d'arrondi.

En plus de l'information d'altitude, l'écran 31 présente par exemple par un indicateur 45 la hauteur d'arrondi.

Le radio altimètre est par exemple directement piloté pour éviter des erreurs de mode commun.

Sur son coté gauche, l'écran peut par exemple présenter un indicateur 46 de déviation verticale. La position de cet indicateur 46 sur une échelle 47 permet notamment de présenter les écarts de guidage au co-pilote. Ces écarts peuvent soit présenter directement les écarts dit ILS, c'est à dire les écarts par rapport à l'axe vertical d'approche, soit l'erreur de guidage entre les vecteurs vitesse, définissant la trajectoire, et l'ordre de guidage élaboré par le calculateur.

En bas de l'écran 31, peut être par exemple présentée l'échelle de localisation 48 qui présente avec une résolution améliorée les écarts bruts de position latérale de l'aéronef en regard du signal de localisation. L'agrandissement de l'échelle de localisation peut se faire avec un facteur variable pour tenir compte des exigences différentes de l'atterrissage et du décollage. Les erreurs de mode commun sont évitées en utilisant directement les signaux du récepteur ILS.

Au centre de l'écran, les symboles de guidage 49, 50 peuvent par exemple être représentés. Le vecteur vitesse 50 et l'ordre de guidage 49 sont inscrits dans un carré 51 qui peut par exemple représenter les écarts maximum admissibles. Lorsque les limites de performances du système sont atteintes, une alarme APCH WRN 43 est par exemple déclenchée. La couleur de fond du carré 51 peut alors passer au rouge de manière à indiquer une procédure particulière dite "go around".

En cas de défaillance du pilote, ces symboles pourraient servir au co-pilote pour assurer le pilotage de l'avion. Ces symboles et l'écran seraient donc utilisés pour permettre au co-pilote de continuer l'approche et l'arrondi, ce qui donnerait notamment la possibilité de compléter un système de collimateur.

Enfin, par exemple en dessous du carré 51 comportant les symboles de guidage 49, 50, la vitesse verticale est présentée sous forme alphanumérique et indique la vitesse verticale instantanée en sortie du système inertiel.

La position des symboles 41, 42, 43, 44, 45, 46, 47, 48, 49, 50, 51 présentée précédemment est donnée à titre d'exemple, toutes autres positions ou situations sont envisageables.

De la présentation d'un mode de réalisation possible selon l'invention tel que présenté par les figures 3 et 4, il ressort bien les avantages suivants
- une amélioration de la sécurité des opérations de pilotage grâce notamment à une présentation des informations de contrôle toujours au même endroit ;
- une simplification des opérations de remplacement ou d'adjonction d'équipements de contrôle car le dispositif selon l'invention peut être conçu par exemple aussi bien pour prendre la place de l'indicateur de vitesse verticale 22 que de l'indicateur de contrôle des paramètres d'approche pour une phase d'atterrissage manuel ;
- une simplification de l'entraînement des pilotes en compagnie grâce notamment à l'utilisation d'un unique instrument au lieu d'une répartition des paramètres à contrôler sur au moins deux instruments ;
- un coût d'équipement moins élevé pour les compagnies grâce notamment à une modification plus simple de la planche de bord.

## Revendications

1. Dispositif de contrôle d'un système d'aéronef en pilotage manuel, comportant un écran de visualisation (31) affichant les informations d'un équipement donné conventionnel (21,22) et des informations pour le contrôle du pilotage, **caractérisé en ce que**, le dispositif de contrôle ayant au moins deux fonctions, l'écran de visualisation, situé sur la partie de la planche de bord (20) du côté droit de la cabine de pilotage munie d'équipements conventionnels, reproduit l'équipement conventionnel donné (21,22) sous sa forme conventionnelle lorsque le dispositif de contrôle assure une première fonction, et affiche les informations de l'équipement conventionnel donné (21,22) et une indication de contrôle des paramètres d'approche lorsque le dispositif de contrôle assure une seconde fonction.

2. Dispositif selon la revendication 1, **caractérisé en ce que** l'équipement conventionnel est l'indicateur de vitesse verticale (22).

3. Dispositif selon l'une quelconque des revendications précédentes, **caractérisé en ce que** l'écran (31) affiche des indicateurs de mode et d'alarmes.

4. Dispositif selon les revendications précédentes, **caractérisé en ce que** l'écran (31) affiche un indicateur d'arrondi (42).

5. Dispositif selon l'une quelconque des revendications précédentes, **caractérisé en ce que** l'écran (31) affiche un indicateur d'écart de trajectoire.

6. Dispositif selon l'une quelconque des revendications précédentes, **caractérisé en ce que** l'écran (31) affiche un indicateur (44) de radio-altimètre présenté sous forme de ruban possédant une surface (44') plus foncée en bas pour symboliser la terre, la surface plus foncée remontant jusqu'au centre du ruban pour donner une information sur la vitesse d'arrondi.

7. Dispositif selon l'une quelconque des revendications précédentes, **caractérisé en ce que** l'écran (31) présente une indication (45) de la hauteur d'arrondi.

8. Dispositif selon l'une quelconque des revendications précédentes, **caractérisé en ce que** l'écran (31) présente une indication (46) de déviation verticale.

9. Dispositif selon l'une quelconque des revendications précédentes, **caractérisé en ce que** l'écran (31) présente une échelle de localisation (48).

10. Dispositif selon l'une quelconque des revendications précédentes, **caractérisé en ce qu'**il présente des symboles de guidage (49, 50).

11. Dispositif selon la revendication 10, **caractérisé en ce que** les symboles de guidage (49, 50) sont affichés dans un carré (51) représentant les écarts maximum possible.

12. Dispositif selon l'une quelconque des revendications précédentes, **caractérisé en ce que** la vitesse verticale est représentée sous forme digitale alphanumérique.

## Patentansprüche

1. Vorrichtung zur Steuerung eines handgeführten Flugzeugsystems mit einem Anzeigebildschirm (31), der die Informationen einer herkömmlichen gegebenen Anlage (21, 22) und Informationen für die Kontrolle der Steuerung darstellt, **dadurch gekennzeichnet, daß**, wobei die Steuervorrichtung mindestens zwei Funktionen aufweist, der Anzeigebildschirm, der sich auf dem Teil des Instrumentenbretts (20) auf der rechten Seite des Cockpits, das mit herkömmlichen Anlagen ausgestattet ist, befindet, die herkömmliche gegebene Anlage (21, 22) in ihrer herkömmlichen Form reproduziert, wenn die Steuervorrichtung eine erste Funktion gewährleistet, und die Informationen der herkömmlichen gegebenen Anlage (21, 22) und eine Anzeige zur Steuerung der Anflugparameter darstellt, wenn die Steuervorrichtung eine zweite Funktion gewährleistet.

2. Vorrichtung nach Anspruch 1, **dadurch gekennzeichnet, daß** die herkömmliche Anlage das Anzeigeinstrument (22) für die vertikale Geschwindigkeit ist.

3. Vorrichtung nach einem der vorangehenden Ansprüche, **dadurch gekennzeichnet, daß** der Bildschirm (31) Betriebsart- und Alarm-Anzeigeinstrumente darstellt.

4. Vorrichtung nach den vorangehenden Ansprüchen, **dadurch gekennzeichnet, daß** der Bildschirm (31) ein Abfang-Anzeigeinstrument (42) darstellt.

5. Vorrichtung nach einem der vorangehenden Ansprüche, **dadurch gekennzeichnet, daß** der Bildschirm (31) ein Anzeigeinstrument der Flugbahnabweichung darstellt.

6. Vorrichtung nach einem der vorangehenden Ansprüche, **dadurch gekennzeichnet, daß** der Bildschirm (31) ein Funkhöhenmesser-Anzeigeinstrument (44) darstellt, das in Form eines Bandes dargestellt wird, welches eine Oberfläche (44') besitzt, die unten dunkler ist, um die Erde zu symbolisieren, wobei die dunklere Oberfläche bis zum Zentrum des Bandes ansteigt, um eine Information über die Abfanggeschwindigkeit zu geben.

7. Vorrichtung nach einem der vorangehenden Ansprüche, **dadurch gekennzeichnet, daß** der Bildschirm (31) eine Anzeige (45) der Abfanghöhe darstellt.

8. Vorrichtung nach einem der vorangehenden Ansprüche, **dadurch gekennzeichnet, daß** der Bildschirm (31) eine Anzeige (46) der vertikalen Abweichung darstellt.

9. Vorrichtung nach einem der vorangehenden Ansprüche, **dadurch gekennzeichnet, daß** der Bildschirm (31) eine Ortungsskala (48) darstellt.

10. Vorrichtung nach einem der vorangehenden Ansprüche, **dadurch gekennzeichnet, daß** sie Führungssymbole (49, 50) darstellt.

11. Vorrichtung nach Anspruch 10, **dadurch gekennzeichnet, daß** die Führungssymbole (49, 50) in einem Quadrat (51) dargestellt werden, das die maximalen möglichen Abweichungen darstellt.

12. Vorrichtung nach einem der vorangehenden Ansprüche, **dadurch gekennzeichnet, daß** die vertikale Geschwindigkeit in digitaler alphanumerischer Form dargestellt wird.

## Claims

1. Device for monitoring an aircraft system under manual control, comprising a presentation screen (31) displaying the information from a conventional given item of equipment (21, 22) and information for the monitoring of control, **characterized in that**, the monitoring device having at least two functions, the presentation screen, situated on the part of the instrument panel (20) on the right side of the cockpit furnished with conventional equipment, reproduces the given conventional item of equipment (21, 22) in its conventional form when the monitoring device undertakes a first function, and displays the information from the given conventional item of equipment (21, 22) and an indication for monitoring the approach parameters when the monitoring device undertakes a second function.

2. Device according to Claim 1, **characterized in that** the conventional item of equipment is the vertical speed indicator (22).

3. Device according to any one of the preceding claims, **characterized in that** the screen (31) displays indicators of mode and of alarms.

4. Device according to the preceding claims, **characterized in that** the screen (31) displays a flare-out indicator (42).

5. Device according to any one of the preceding claims, **characterized in that** the screen (31) displays a trajectory offset indicator.

6. Device according to any one of the preceding claims, **characterized in that** the screen (31) displays a radio altimeter indicator (44) presented in the form of a strip possessing a darker area (44') at the bottom so as to symbolise the earth, the darker area rising to the centre of the strip so as to yield an item of information regarding the flare-out speed.

7. Device according to any one of the preceding claims, **characterized in that** the screen (31) depicts an indication (45) of the flare-out height.

8. Device according to any one of the preceding claims, **characterized in that** the screen (31) depicts an indication (46) of vertical deviation.

9. Device according to any one of the preceding claims, **characterized in that** the screen (31) depicts a locating scale (48).

10. Device according to any one of the preceding claims, **characterized in that** it depicts guidance symbols (49, 50).

11. Device according to Claim 10, **characterized in that** the guidance symbols (49, 50) are displayed in a square (51) representing the maximum possible offsets.

12. Device according to any one of the preceding claims, **characterized in that** the vertical speed is represented in alphanumeric digital form.
